(19) Europäisches Patentamt / European Patent Office / Office européen des brevets

(11) **EP 4 286 885 B1**

(12) **FASCICULE DE BREVET EUROPEEN**

(45) Date de publication et mention de la délivrance du brevet:
**27.11.2024   Bulletin 2024/48**

(21) Numéro de dépôt: **23166382.4**

(22) Date de dépôt: **03.04.2023**

(51) Classification Internationale des Brevets (IPC):
**G01S 7/48** *(2006.01)*       **G01S 7/497** *(2006.01)*
**F41G 3/14** *(2006.01)*       **F41G 7/22** *(2006.01)*
**G01S 17/10** *(2020.01)*       **G01S 7/51** *(2006.01)*
**F41G 3/02** *(2006.01)*       **G05B 23/02** *(2006.01)*
**G06F 11/27** *(2006.01)*

(52) Classification Coopérative des Brevets (CPC):
**G01S 7/4808; F41G 3/02; F41G 3/145;**
**F41G 7/226; F41G 7/2293; G01S 7/497;**
**G01S 7/51; G01S 17/10**

(54) **PROCEDE ET SYSTEME DE GESTION CONTINUE EN VOL D'UN GENERATEUR DE FAISCEAUX EMBARQUE**

VERFAHREN UND SYSTEM ZUR KONTINUIERLICHEN FLUGVERWALTUNG EINES INTEGRIERTEN STRAHLGENERATORS

METHOD AND SYSTEM FOR CONTINUOUS IN-FLIGHT MANAGEMENT OF AN ON-BOARD BEAM GENERATOR

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **31.05.2022   FR 2205114**

(43) Date de publication de la demande:
**06.12.2023   Bulletin 2023/49**

(73) Titulaire: **Airbus Helicopters**
**13725 Marignane Cedex (FR)**

(72) Inventeur: **BOOS, Nikolaus**
**13700 MARIGNANE (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
**EP-A1- 3 521 855       FR-A1- 2 970 358**
**US-B1- 8 400 625**

• **SABATINI R ET AL: "A new approach to eye-safety analysis for airborne laser systems flight test and training operations", OPTICS AND LASER TECHNOLOGY, ELSEVIER SCIENCE PUBLISHERS BV., AMSTERDAM, NL, vol. 35, no. 3, 1 April 2003 (2003-04-01), pages 191 - 198, XP004409064, ISSN: 0030-3992, DOI: 10.1016/S0030-3992(02)00171-8**

## Description

La présente invention est du domaine des dispositifs embarqués sur un aéronef émettant un faisceau lumineux. Elle concerne plus particulièrement le domaine des dispositifs émettant un faisceau laser.

La présente invention concerne un procédé de gestion continue en vol d'un générateur de faisceaux embarqué ainsi qu'un système de gestion continue en vol de ce générateur de faisceaux embarqué.

Un faisceau lumineux peut être émis depuis un aéronef en vol par un générateur de faisceaux embarqué et peut avoir différentes utilisations de telle sorte qu'il peut être utilisé dans différents buts.

Un tel faisceau lumineux émis depuis un aéronef peut être utilisé pour pointer un objet afin de signaler cet objet par exemple à des personnes présentes dans l'aéronef embarquant le générateur de faisceaux ou bien à des personnes extérieures à cet aéronef. Le générateur de faisceaux peut alors être désigné par le terme « pointeur ».

Un tel faisceau émis depuis un aéronef peut également être utilisé pour illuminer une zone, par exemple à l'aide d'un faisceau infrarouge, afin de permettre à des personnes au sol ou en vol équipées d'éléments de vision adaptés d'avoir une vision amplifiée et/ou améliorée, par exemple la nuit. Le générateur de faisceaux peut alors être désigné par le terme « illuminateur ».

Un faisceau lumineux émis depuis un aéronef peut aussi être employé pour désigner une cible afin de guider un projectile vers la cible désignée. Cette technique est par exemple dénommée autoguidage semi actif par laser ou encore est désignée par l'acronyme « SALH » correspondant en langue anglaise à l'expression « Semi-Active Laser Homing ». Selon cette technique et tel que décrit dans le document US 4143835, un faisceau lumineux de type laser est maintenu pointé par un opérateur sur une cible. Des faisceaux réfléchis de ce faisceau laser incident sont alors dispersés dans une multitude de directions par réflexion sur la cible. Un projectile peut être alors lancé ou lâché en direction de la cible. Lorsque le projectile est suffisamment proche de la cible, un dispositif de réception du projectile reçoit une partie du faisceau lumineux réfléchi par la cible. La trajectoire du projectile est alors ajustée en direction de la cible. Le générateur de faisceaux peut alors être désigné par l'expression « dispositif de désignation ».

Un faisceau lumineux émis depuis un aéronef peut encore être utilisé pour déterminer une distance entre l'aéronef et l'objet pointé par le faisceau. Le générateur de faisceaux peut alors être désigné par le terme « télémètre » et utilise le temps mis par le faisceau lumineux pour atteindre l'objet et pour revenir au générateur de faisceaux après réflexion sur l'objet. Un tel télémètre peut éventuellement déterminer d'autres caractéristiques de l'objet, telles que sa vitesse et son cap.

Quelle que soit son utilisation, on entend par « faisceau lumineux », un faisceau généralement composé d'ondes lumineuses visibles par l'œil humain. Toutefois et par extension, on peut également désigner par « faisceau lumineux », un faisceau composé d'ondes électromagnétiques non visibles, par exemple dont les longueurs d'onde sont situées dans les domaines infrarouge et ultraviolet.

En outre, un faisceau lumineux peut être un faisceau laser. Le terme « laser » est un acronyme désignant en langue anglaise l'expression « Light Amplification by Stimulated Emission of Radiation » et signifiant « amplification de la lumière par émission stimulée de radiation ». Un faisceau laser est un faisceau lumineux particulier composé d'une lumière cohérente et concentrée. Un faisceau laser peut donc être un faisceau lumineux d'ondes présentant une longueur d'onde située aussi bien dans le domaine visible par l'œil humain que dans le domaine non visible, en particulier dans les domaines infrarouge et ultraviolet.

Par souci de simplification, le terme « faisceau » sera utilisé par la suite pour désigner un faisceau lumineux.

Un faisceau, et en particulier un faisceau laser, peut être dangereux pour les personnes situées dans l'aéronef et en dehors de l'aéronef, en particulier au sol, si ce faisceau est dirigé vers leurs yeux. Des personnes peuvent, par exemple, se trouver au sol à proximité d'un objet pointé ou désigné ou d'une zone illuminée par un tel faisceau. La zone couverte au sol par un faisceau et susceptible d'être dangereuse pour une personne est l'intersection d'un cône formé par le faisceau avec le sol. Ce cône formé par le faisceau peut être désigné par l'acronyme LSDZ pour la désignation en langue anglaise « Laser Surface Danger Zone ».

Les aspects de sécurité liés aux personnes situées dans l'aéronef sont généralement traités par la certification ou la qualification de l'aéronef.

En ce qui concerne les personnes au sol, des procédures ou des instructions à suivre sont généralement présentes dans le manuel de vol d'un aéronef embarquant un générateur de faisceaux. Ces procédures ou instructions comportent par exemple des abaques fournissant la superficie de la zone couverte au sol en fonction de différents paramètres en utilisant des hypothèses sur certains de ces paramètres.

En outre, durant un essai, une zone sécurisée au sol peut être identifiée, aucune personne non protégée contre les blessures susceptibles d'être provoquées par le faisceau ne devant alors être présente dans cette zone sécurisée. Cette zone sécurisée peut être désignée par l'acronyme CRA pour la désignation en langue anglaise « Controlled Risk Area ». Les personnes autorisées à se trouver dans la zone CRA sécurisée portent des éléments de protection adaptés tels que des lunettes par exemple. La zone CRA sécurisée est par exemple déterminée en fonction des conditions de l'essai, des caractéristiques du générateur de faisceaux et du faisceau ainsi que des conditions météorologiques.

Par ailleurs, un faisceau, et un faisceau laser en particulier, est caractérisé par une distance de sécurité, que l'on peut aussi appeler « distance nominale de risque oculaire », désignée par l'acronyme NOHD pour la désignation en langue anglaise « Nominal Ocular Hazard Distance ». Une personne située au-delà de cette distance de sécurité NOHD par rapport au générateur de faisceaux ne court pas de risques de blessure si le faisceau est dirigé vers ses yeux alors qu'en-deçà de cette distance de sécurité NOHD, un risque de blessure existe. La zone couverte au sol est ainsi fonction de cette distance de sécurité NOHD.

Une distance NSHD pour la désignation en langue anglaise « Nominal Skin Hazard Distance » peut aussi être calculée. En effet, une personne située à une distance du générateur de faisceaux inférieure à la distance NSHD s'expose à un risque de blessures provoquées sur sa peau.

Avant d'utiliser un faisceau, un opérateur doit avoir connaissance de cette distance de sécurité NOHD pour estimer s'il y a un risque que le faisceau illumine une zone au sol dans laquelle seraient situées des personnes et également pour estimer les dimensions de cette zone couverte au sol. Cependant, afin d'être adaptée à toutes les situations, cette distance de sécurité NOHD est généralement maximisée.

Par exemple, la distance de sécurité NOHD est définie, selon une technique connue, avec pour hypothèse qu'aucune atténuation atmosphérique n'affecte le faisceau dans l'air avant qu'il atteigne le sol. En pratique, une atténuation atmosphérique plus ou moins importante peut faire diminuer cette distance de sécurité NOHD, en fonction par exemple du taux d'humidité de l'air, de la présence de brouillard, de poussière et/ou de sable.

Par ailleurs, un faisceau peut être obtenu par une succession d'impulsions émises à intervalles de temps réguliers, voire irréguliers, mais dans tous les cas ces intervalles sont connus, notamment lorsque le faisceau est émis par un dispositif de désignation. Dans ce cas, la distance de sécurité NOHD est également fonction de la durée d'émission de la séquence du faisceau. Un coefficient C5 caractérise cette durée d'émission du faisceau et sa fréquence éventuelle d'impulsions. Pour un faisceau muni d'une seule impulsion, le coefficient C5 est égal à 1 alors que pour une séquence du faisceau comportant une succession d'impulsions, le coefficient C5 est inférieur à 1.

Quand le coefficient C5 est inférieur à 1, la distance NOHD est augmentée.

Une distance de sécurité NOHD peut être de l'ordre d'un kilomètre pour un pointeur ou un illuminateur et de l'ordre de plusieurs dizaines de kilomètres pour un dispositif de désignation.

La superficie de la zone couverte au sol est également fonction de l'angle de variation qui affecte le faisceau, cet angle de variation étant fonction d'une part du générateur de faisceaux et d'autre part des mouvements de l'aéronef. Par hypothèse, cet angle de variation est souvent considéré comme étant égal à +/- 1° autour d'une ligne de visée. Cet angle de variation est surtout fonction de la stabilité de l'aéronef en vol, la divergence angulaire due au générateur de faisceaux étant généralement largement plus faible, en particulier pour un faisceau laser.

La superficie de la zone couverte au sol est en outre fonction de la hauteur de l'aéronef par rapport au sol et de l'angle de la ligne de visée du faisceau avec un plan horizontal d'un référentiel terrestre. Un plan horizontal est par exemple défini perpendiculairement à la direction de la gravité terrestre. Une mesure ou une estimation de la hauteur de l'aéronef par rapport au sol survolé peut être fournie par un instrument de l'aéronef, par exemple une radiosonde, cette hauteur étant considérée parallèlement à la direction de la gravité terrestre. Une mesure ou une estimation de l'angle de la ligne de visée du faisceau avec un plan horizontal d'un référentiel terrestre peut par exemple être fournie par le générateur de faisceaux ou bien par un dispositif dédié.

La superficie de la zone couverte au sol est aussi fonction de la forme du terrain illuminé par le faisceau. Par hypothèse, le terrain est généralement considéré plat et horizontal ce qui maximise la superficie de la zone couverte au sol.

L'opérateur en charge du générateur de faisceaux peut alors, en fonction de ces valeurs de hauteur de l'aéronef, d'angles du faisceau et de ces hypothèses, obtenir une estimation de la superficie de la zone couverte au sol ainsi que de la distance de sécurité NOHD à appliquer à l'aide d'abaques.

La publication « A new approach to eye-safety analysis for airborne laser systems flight test and training operations » de R. SABATINI et M.A RICHARDSON, 1er avril 2003, XP004409064, décrit une méthode d'évaluation des risques associés à l'utilisation de systèmes laser aéroportés afin notamment de déterminer la surface au sol illuminée par le faisceau laser et susceptible d'être dangereuse pour des personnes au sol. Cette surface est notamment déterminée en fonction de la distance nominale de risque oculaire NOHD, de l'énergie maximale admissible MPE, et des caractéristiques du faisceau laser. Cette méthode peut être appliquée par un ordinateur.

Le document US 2009/0273770 décrit un système d'imagerie laser, de détection et de télémétrie (LIDAR) qui ajuste automatiquement les caractéristiques du faisceau laser afin qu'aucun dommage oculaire ne se produise pour des personnes se trouvant dans la zone illuminée par le faisceau laser. Par exemple, une mesure de la distance des cibles est automatiquement réalisée afin de déterminer les cibles les plus proches. Un dispositif laser émet un faisceau laser et un contrôleur ajuste la fréquence des impulsions, la puissance et/ou la durée des impulsions du dispositif laser en fonction de la distance mesurée de la cible la plus proche afin de se conformer à un modèle de sécurité oculaire prédéfini.

La publication « A procedure for the estimation of intrabeam hazard distances and optical density requirements under the ANSI Z136.1-2000 Standard » de Robert J. THOMAS et Benjamin A. ROCKWELL, 1er août 2004, XP055866113, décrit différentes approches pour l'estimation des dangers pour les personnes lors l'utilisation de faisceaux laser dans le cadre de la norme nationale américaine (ANSI ZI36.1). Ces approches permettent de calculer notamment l'énergie maximale admissible *MPE* et la distance nominale de risque oculaire *NOHD.*

Les documents FR 2970358, US 2010/0073198, EP 3521855 et US 8400625 sont éloignés de l'invention.

Le document FR 2970358 décrit l'estimation d'une durée avant maintenance d'équipements électroniques embarqués dans un aéronef et vise la surveillance de l'état de marche et l'entretien de ces équipements électroniques. Ce procédé comporte diverses étapes effectuées durant un cycle de vie de l'équipement, dont des étapes de modélisation de l'équipement, de simulation d'un endommagement de l'équipement, de fusion de données d'endommagement et de données significatives de distances réelles avant défaillance, et de mise à disposition d'un pronostic de durée de vie de l'équipement électronique embarqué. Ce procédé comporte également des étapes de mesures d'un paramètre physique de l'équipement et, de paramètres de vol et/ou de performance de l'aéronef.

Le document US 2010/0073198 décrit une interface homme-machine pour assister un pilote lors du décollage ou de l'atterrissage d'un aéronef par visibilité extérieure réduite.

Le document décrit un ensemble comprenant un panneau de verre pouvant être partiellement obscurci et positionné sur le trajet d'un faisceau lumineux généré par un système de génération de laser, par exemple de type LIDAR. Un contrôleur peut commander une gradation de l'obscurcissement du panneau de verre pour protéger des opérateurs, par exemple en fonction de la distance nominale de risque oculaire NOHD.

Le document US 8400625 décrit des systèmes et des procédés pour tester l'axe de visée d'une caméra à cardan et d'un système laser, tel qu'un système de contre-mesures infrarouges, dans des environnements extrêmes.

Ces documents ainsi que les procédures et les instructions présentes par exemple dans le manuel de vol d'un aéronef ne prennent pas en compte une potentielle défaillance du générateur de faisceaux.

Toutefois, un générateur de faisceaux peut être soumis à des défaillances n'empêchant pas la génération d'un faisceau, mais provoquant l'émission d'un faisceau non conforme aux consignes, en étant par exemple dirigé dans une direction inappropriée.

Le document "MATILDA: A Military Laser Range Safety Tool Based on Probabilistic Risk Assessment (PRA) Techniques", publié en août 2014 sous la référence « AFRL-RH-FS-TR-2014-0035 » par le laboratoire de recherche de l'armée de l'air des Etats-Unis prend en compte une telle défaillance. Ce document décrit un outil de sécurité pour les champs de tir militaires basé sur des techniques de calcul probabiliste du risque qu'un faisceau provoque des blessures à une personne au sol, en particulier des dommages oculaires.

Cet outil de sécurité définit ce risque en fonction d'une chaîne d'événements, chaque événement ayant une probabilité de se produire. Ce risque est par exemple égal au produit d'une première probabilité que le faisceau soit dirigé dans une direction inappropriée, c'est-à-dire en dehors de la zone prévue, d'une deuxième probabilité qu'une personne non protégée soit atteinte par le faisceau et d'une troisième probabilité que cette personne atteinte par le faisceau subisse une blessure oculaire.

Dans ce cadre, la présente invention a pour objectif de s'affranchir des limitations mentionnées en permettant d'estimer de façon continue durant le vol le risque de blessure de personnes au sol du fait de l'utilisation du générateur de faisceaux.

La présente invention a alors pour objet un procédé de gestion continue en vol d'un générateur de faisceaux embarqué dans un aéronef ainsi qu'un système de gestion continue en vol d'un tel générateur de faisceaux embarqué selon les revendications.

Tout d'abord, le procédé de gestion continue en vol d'un générateur de faisceaux embarqué dans un aéronef, l'aéronef comporte :

- le générateur de faisceaux émettant un faisceau lumineux,
- des senseurs,
- un calculateur,
- un dispositif de visualisation, et
- un dispositif de localisation.

L'expression « générateur de faisceaux » est à considérer de façon globale, le générateur de faisceaux comportant un ensemble électro-optique permettant l'émission d'un faisceau, et muni notamment d'un sous-système émetteur qui émet le faisceau, d'un sous-système d'orientation qui oriente le faisceau vers le point visé, un sous-système de commande, un éventuel sous-système de stabilisation.

Ce procédé est remarquable en ce qu'il comporte au moins les étapes suivantes :

- acquisition en continue d'une valeur d'au moins un paramètre du générateur de faisceaux à l'aide d'au moins un senseur parmi les senseurs,
- acquisition en continue d'une valeur d'au moins un paramètre de l'aéronef à l'aide d'au moins un senseur parmi les senseurs, ledit au moins un paramètre de l'aéronef étant distinct dudit au moins un paramètre du générateur de faisceaux,
- estimation en continue d'une information relative à la fiabilité du générateur de faisceaux sur une durée prédéterminée à l'aide du calculateur en fonction au minimum des valeurs successives dudit au moins un paramètre du générateur de faisceaux et dudit au moins un paramètre de l'aéronef, et de données issues d'un historique mémorisé du générateur de faisceaux, et

- affichage d'au moins une indication relative au générateur de faisceaux sur le dispositif de visualisation, ladite au moins une indication étant fonction de ladite information.

Ce procédé de gestion continue en vol d'un générateur de faisceaux embarqué dans un aéronef permet ainsi d'estimer en continue lors d'un vol de l'aéronef un risque de panne ou de défaillance de ce générateur de faisceaux embarqué à court terme et d'afficher pour un opérateur en charge du générateur de faisceaux et/ou le pilote de l'aéronef, une indication qui est fonction de ce risque estimé. Une panne ou une défaillance de ce générateur de faisceaux embarqué peut être par exemple identifiée par l'absence d'émission d'un faisceau, par l'émission d'un faisceau transportant une énergie différente de l'énergie requise ou par l'émission d'un faisceau dans une direction différente de la direction visée.

L'expression « en continue » fait référence à une action réalisée en permanence et selon une fréquence d'échantillonnage. Cette fréquence d'échantillonnage peut être fixe ou variable. Cette fréquence d'échantillonnage peut par exemple être prédéterminée. Cette fréquence d'échantillonnage peut aussi être définie en fonction des capacités des senseurs pour acquérir successivement des valeurs de paramètres et/ou en fonction des capacités du calculateur pour estimer successivement une information relative à la fiabilité du générateur de faisceaux.

L'expression « en continue » peut donc prendre le sens de « successivement et à intervalles réguliers, voire irréguliers ».

De la sorte, les acquisitions des valeurs du ou des paramètres du générateur de faisceaux et de l'aéronef sont réalisées successivement et à intervalles réguliers, voire irréguliers, respectivement à l'aide d'au moins un senseur. Les acquisitions des valeurs du ou des paramètres du générateur de faisceaux et des valeurs du ou des paramètres de l'aéronef sont de préférence réalisées en parallèle, à savoir sensiblement simultanément. Toutefois, ces acquisitions peuvent éventuellement être réalisées de façon séquentielle. Par ailleurs, ces acquisitions peuvent être réalisées à partir du démarrage de l'aéronef ou du décollage de l'aéronef.

Le ou les paramètres du générateur de faisceaux peuvent être choisis par exemple parmi une température, un taux d'humidité interne et une durée d'utilisation du générateur de faisceaux ainsi qu'une amplitude des vibrations subies par le générateur de faisceaux et des données d'asservissement permettant de compenser les vibrations et/ou les mouvements du générateur de faisceaux. Les senseurs comportent par exemple un dispositif de mesure d'une température muni d'un thermomètre ou d'une thermistance, un dispositif de mesure du taux d'humidité, tel un hygromètre, un dispositif de mesure d'une durée d'utilisation, une centrale inertielle, un gyroscope ou un système micro-électromécanique connu sous l'acronyme MEMS pour la désignation en langue anglaise « MicroElectroMechanical System », un dispositif de pilotage de l'asservissement du générateur de faisceaux, ces senseurs étant attachés au générateur de faisceaux.

Le ou les paramètres de l'aéronef peuvent être choisis par exemple parmi des vibrations subies par l'aéronef ainsi qu'un facteur de charges, une charge aérodynamique de l'aéronef. Les senseurs comportent par exemple, pour réaliser ces acquisitions, une centrale inertielle ou un gyroscope, ces senseurs étant attachés à l'aéronef.

Chaque paramètre de l'aéronef est distinct de chaque paramètre du générateur de faisceaux.

L'information relative à la fiabilité du générateur de faisceaux est estimée successivement et à intervalles réguliers, voire irréguliers à l'aide du calculateur et en fonction au minimum des valeurs successives du ou des paramètres du générateur de faisceaux et du ou des paramètres de l'aéronef, et de données issues d'un historique du générateur de faisceaux. Cet historique peut être stocké dans une mémoire du calculateur ou dans une mémoire reliée au calculateur.

L'information relative à la fiabilité du générateur de faisceaux est estimée sur une durée prédéterminée. L'expression « sur une durée prédéterminée » signifie que l'information relative à une fiabilité du générateur de faisceaux est estimée à partir de l'instant courant et correspond à une fiabilité prévisionnelle valable pour la durée prédéterminée. Cette durée prédéterminée est de préférence inférieure ou égale à la durée de la mission ou à la durée du vol de l'aéronef.

Cette durée prédéterminée peut être fixe et constante durant le vol de l'aéronef. Cette durée prédéterminée peut également être variable, voire peut diminuer au cours du vol de l'aéronef, la durée prédéterminée étant par exemple égale à une durée prédéterminée initiale à laquelle est retirée la durée courante de vol de l'aéronef. La durée prédéterminée initiale est par exemple égale à la durée estimée entre le décollage de l'aéronef et l'instant estimé du ou des émissions de faisceaux par le générateur de faisceaux.

L'information relative à la fiabilité du générateur de faisceaux est ainsi estimée à court terme à partir de l'instant courant.

L'historique du générateur de faisceaux peut comporter par exemple des données passées relatives au fonctionnement du générateur de faisceaux dans sa globalité, à savoir de l'ensemble électro-optique permettant l'émission d'un faisceau. Ces données ont été enregistrées lors des utilisations précédentes du générateur de faisceaux et/ou lors d'opérations de maintenance de ce générateur de faisceaux. Cet historique est de préférence mis à jour pour comporter l'ensemble des données passées avant le vol de l'aéronef. L'historique est par exemple stocké dans une mémoire du calculateur ou dans une mémoire reliée au calculateur.

Cet historique peut comporter, par exemple, au minimum des données relatives à des pannes et défaillances du générateur de faisceaux dans sa globalité, à des opérations de maintenance effectuées sur le générateur de faisceaux et à des émissions de faisceaux effectuées par le générateur de faisceaux. Cet historique peut aussi comporter des données relatives aux températures, aux durées d'utilisation et aux amplitudes des vibrations subies par le générateur de faisceaux dans sa globalité, à savoir pour l'ensemble électro-optique de ce générateur de faisceaux. Ces données passées sont de préférence datées pour pouvoir associer par exemple la survenue de pannes ou de défaillances aux températures, durées d'utilisation et amplitudes des vibrations préalablement subies par le générateur de faisceaux.

Enfin, au moins une indication relative au générateur de faisceaux et fonction de l'information relative à une fiabilité du générateur de faisceaux est affichée sur le dispositif de visualisation. De la sorte, le pilote de l'aéronef ou l'opérateur en charge du générateur de faisceaux peut prendre connaissance de la ou les indications relatives au générateur de faisceaux avant d'effectuer une émission d'un faisceau à l'aide du générateur de faisceaux et décider d'effectuer ou non cette émission en fonction de la ou des indications affichées.

Ce procédé peut de plus comprendre une ou plusieurs des caractéristiques qui suivent, prises seules ou en combinaison.

Selon une possibilité, l'information relative à la fiabilité du générateur de faisceaux peut être un taux de fiabilité à court terme, ce dernier est fonction notamment de la durée moyenne entre défaillances *MTBF,* que ce soit une durée moyenne entre défaillances *MTBF* théorique, une durée moyenne entre défaillances *MTBF* nominale ou une durée moyenne entre défaillances *MTBF* observée, et des valeurs successives dudit au moins un paramètre du générateur de faisceaux, dudit au moins un paramètre de l'aéronef, et de données issues d'un historique mémorisé du générateur de faisceaux.

La durée moyenne entre défaillances *MTBF* théorique est par exemple calculée sur la base de la fiabilité de tous les composants du générateur de faisceaux. En général, ce calcul de la durée moyenne entre défaillances *MTBF* théorique repose sur une méthode appelée « Analyse des modes de défaillance, de leurs effets et de leur criticité » et connue sous l'acronyme *AMDEC* ou en langue anglaise *FMECA* pour la désignation « Failure Mode and Effect Critical Analysis ».

La durée moyenne entre défaillances *MTBF* nominal est une valeur généralement fournie par le constructeur du générateur de faisceaux ou une valeur forfaitaire retenue pour un type de générateur de faisceaux.

La durée moyenne entre défaillances *MTBF* observé peut être une valeur estimée sur la base du nombre de pannes observées sur l'ensemble des équipements utilisés. Cette valeur peut être égale par exemple, en première approximation, à la durée d'utilisation totale de tous les équipements divisée par le nombre total de pannes.

Selon une autre possibilité compatible avec la précédente, ladite au moins une indication relative au générateur de faisceaux peut par exemple comporter un symbole représentant un niveau de fiabilité, par rapport à un seuil de fiabilité prédéfini. Dans ce but, le procédé selon l'invention peut comporter une comparaison de l'information relative à la fiabilité du générateur de faisceaux et d'un seuil de fiabilité prédéterminé, et ladite au moins une indication relative au générateur de faisceaux comporte alors un premier symbole si l'information relative à la fiabilité du générateur de faisceaux est inférieure au seuil de fiabilité et un deuxième symbole distinct du premier symbole si l'information relative à la fiabilité du générateur de faisceaux est supérieure au seuil de fiabilité. Lorsque l'information relative à la fiabilité du générateur de faisceaux est égale au seuil de fiabilité, ladite au moins une indication relative au générateur de faisceaux peut comporter le premier ou le deuxième symbole selon la valeur de seuil de fiabilité choisie.

De la sorte, le pilote de l'aéronef ou l'opérateur en charge du générateur de faisceaux visualise rapidement, grâce au premier symbole ou au deuxième symbole affiché, si l'information relative à la fiabilité du générateur de faisceaux est inférieure ou supérieure au seuil de fiabilité prédéterminé et donc si l'émission d'un faisceau peut être effectuée de façon fiable. Par exemple, si le deuxième symbole est affiché, le pilote de l'aéronef ou l'opérateur en charge du générateur de faisceaux sait que le générateur de faisceaux est fiable et que le risque de défaillance ou de panne au moment de l'émission d'un faisceau est faible.

A contrario, si le premier symbole est affiché, le pilote de l'aéronef ou l'opérateur en charge du générateur de faisceaux sait qu'un risque de défaillance ou de panne au moment de l'émission d'un faisceau est important et qu'il est peut être préférable de ne pas commander l'émission d'un faisceau.

Le premier symbole peut par exemple être un voyant rouge ou une croix rouge. Le deuxième symbole peut par exemple être un voyant vert ou un disque vert.

Selon une autre possibilité compatible avec les précédentes, le procédé selon l'invention peut comporter une acquisition d'au moins un paramètre de l'environnement de l'aéronef à l'aide d'au moins un senseur parmi les senseurs, ledit au moins un paramètre de l'environnement étant choisi parmi une température de l'air extérieur à l'aéronef, une pression atmosphérique extérieure à l'aéronef, un taux d'humidité de l'air extérieur à l'aéronef. L'estimation de l'information relative à la fiabilité du générateur de faisceaux est alors également réalisée en fonction dudit au moins un paramètre de l'environnement en plus des paramètres déjà évoqués.

Selon une autre possibilité compatible avec les précédentes, l'estimation en continue de l'information relative à la fiabilité du générateur de faisceaux sur une durée prédéterminée à l'aide du calculateur peut être réalisée à l'aide d'une loi ou bien peut être réalisée à l'aide d'une intelligence artificielle. Cette loi peut comporter par exemple une équation ou un système de plusieurs équations. Cette loi a par exemple été préalablement définie par un calcul théorique ou bien de façon empirique à l'aide notamment de l'historique des pannes et défaillances subies par des générateurs de faisceaux identiques ou similaires et des caractéristiques et paramètres de ces générateurs de faisceaux. L'intelligence artificielle comporte par exemple un réseau de neurones alimenté avec les données de l'historique.

Selon l'invention, le procédé comporte les étapes suivantes :

- détermination d'une position de l'aéronef à l'aide du dispositif de localisation,
- détermination de paramètres du faisceau, les paramètres du faisceau étant distincts dudit au moins un paramètre du générateur de faisceaux et dudit au moins un paramètre de l'aéronef,
- détermination d'une distance de sécurité *NOHD* relative au faisceau lumineux en fonction des paramètres du faisceau à l'aide du calculateur,
- détermination d'au moins une valeur relative au risque de blessure susceptible d'être provoquée par le générateur de faisceaux sur au moins une zone au sol, en fonction de la position de l'aéronef, de la distance de sécurité *NOHD,* des paramètres du faisceau et de l'information relative à une fiabilité du générateur de faisceaux à l'aide du calculateur,
- lors de l'affichage, ladite au moins une indication relative au générateur de faisceaux est fonction de ladite au moins une valeur relative au risque de blessure attachée à ladite au moins une zone au sol.

De la sorte, le procédé permet d'informer le pilote ou l'opérateur en charge du générateur de faisceaux du risque de blessure par le faisceau de personnes non protégées susceptibles de se situer au sol sur une ou plusieurs zones.

Typiquement, une telle zone peut être une surface au sol située à une distance inférieure à la distance de sécurité *NOHD* du générateur de faisceau et extérieure à une zone sécurisée *CRA* lorsque celle-ci est définie lors d'un essai ou d'un exercice d'entraînement par exemple.

Le dispositif de localisation peut comporter une centrale inertielle et/ou un récepteur de localisation d'un système de localisation par satellites permettant de déterminer une position de l'aéronef dans un référentiel terrestre, par exemple sous la forme de coordonnées en latitude, longitude et altitude par rapport à un niveau de référence, généralement le niveau de la mer. Le dispositif de localisation peut aussi comporter un dispositif de mesure d'une hauteur de l'aéronef par rapport au sol survolé, tel qu'une radiosonde par exemple.

La distance de sécurité *NOHD* relative au faisceau lumineux peut être calculée à l'aide du calculateur en fonction des paramètres dudit faisceau selon diverses méthodes, par exemple une des méthodes décrites dans le document FR2104570, la publication « A new approach to eye-safety analysis for airborne laser systems flight test and training operations » de R. SABATINI et M.A RICHARDSON, 1er avril 2003, XP004409064 ou encore la publication « A procedure for the estimation of intrabeam hazard distances and optical density requirements under the ANSI Z136.1-2000 Standard » de Robert J. THOMAS et Benjamin A. ROCKWELL, 1er août 2004, XP055866113.

Les paramètres dudit faisceau permettant de déterminer la distance de sécurité *NOHD* peuvent par exemple comporter plusieurs des paramètres suivants :

- un coefficient *C5* relatif à une durée d'émission du faisceau et sa fréquence éventuelle d'impulsions,
- un coefficient d'atténuation du faisceau dans l'air.

Au moins une valeur relative au risque de blessure peut alors être calculée à l'aide du calculateur pour au moins une zone au sol. Cette au moins une valeur relative au risque de blessure peut être la probabilité qu'il y ait un blessé sur ladite au moins une zone. Alternativement, cette au moins une valeur relative au risque de blessure peut être une densité surfacique de risque de blessure sur ladite au moins une zone au sol, cette densité surfacique étant évaluée sur une collection de points inclus dans ladite au moins une zone au sol.

Cette ou ces valeurs relatives au risque de blessure sont, par exemple, proportionnelles au produit de plusieurs facteurs qui sont notamment fonction de la position de l'aéronef, de la distance de sécurité *NOHD,* des paramètres dudit faisceau et de l'information relative à une fiabilité du générateur de faisceaux.

Un premier facteur est relatif à l'émission d'un faisceau dans une mauvaise direction due à une défaillance du générateur de faisceaux. Ce premier facteur est, par exemple, fonction de l'information relative à une fiabilité du générateur de faisceaux et éventuellement de la durée d'émission du faisceau.

Un deuxième facteur est relatif au risque que le faisceau atteigne une personne au sol. Ce deuxième facteur est, par exemple, fonction de la durée d'émission du faisceau, du nombre d'impulsions de ce faisceau, du coefficient *C5* et/ou de la distance de sécurité *NOHD* ainsi que de la superficie de la zone au sol couverte par le faisceau.

Un troisième facteur est relatif à la gravité de la blessure provoquée sur une personne au sol atteinte par le faisceau.

Afin de limiter les ressources utilisées du calculateur, ladite au moins une valeur relative au risque de blessure est déterminée uniquement pour une ou plusieurs zones au sol situées à une distance inférieure ou égale à la distance de sécurité *NOHD.* En effet, au-delà de cette distance de sécurité *NOHD,* les personnes au sol ne courent pas de risques de blessure, y compris si elles ne sont pas équipées d'éléments de protection adaptés.

Selon une autre possibilité compatible avec les précédentes, ladite au moins une valeur relative au risque de blessure peut être déterminée en fonction aussi d'une densité de population sur la zone concernée parmi ladite au moins une zone au sol en complément des paramètres déjà cités, la densité de population étant stockée dans une mémoire du calculateur ou dans une mémoire reliée au calculateur. La densité de population peut, par exemple, être prise en compte dans le deuxième facteur.

Selon une autre possibilité compatible avec les précédentes, ladite au moins une indication relative au générateur de faisceaux peut comporter ladite au moins une valeur relative au risque de blessure attachée à ladite au moins une zone au sol.

Selon une autre possibilité compatible avec les précédentes, ladite au moins une indication relative au générateur de faisceaux peut comporter au moins une zone au sol et un indicateur fonction de ladite au moins une valeur relative au risque de blessure attachée à ladite au moins une zone au sol.

Selon une autre possibilité compatible avec les précédentes, au moins une zone spécifique parmi ladite au moins une zone au sol peut être prédéfinie, et le procédé peut alors comporter une émission d'un message d'alerte si la valeur relative au risque de blessure attachée à une zone parmi ladite au moins une zone au sol qui est distincte de ladite au moins une zone spécifique est supérieure à un seuil de risque prédéfini.

La présente invention a aussi pour objet un système de gestion continue en vol d'un générateur de faisceaux embarqué dans un aéronef, le système comportant :

- le générateur de faisceaux émettant un faisceau lumineux,
- des senseurs,
- un calculateur, et
- un dispositif de visualisation.

Ce système de gestion continue en vol d'un générateur de faisceaux embarqué est configuré pour mettre en oeuvre le procédé selon l'invention précédemment décrit.

L'invention et ses avantages apparaîtront avec plus de détails dans le cadre de la description qui suit avec des exemples de réalisation donnés à titre illustratif en référence aux figures annexées qui représentent :

- la figure 1, un aéronef muni d'un système de gestion continue en vol d'un générateur de faisceaux embarqué dans un aéronef selon l'invention,
- la figure 2, un schéma synoptique d'un procédé de gestion continue en vol d'un générateur de faisceaux embarqué dans un aéronef selon l'invention,

- la figure 3, un schéma synoptique d'un procédé de gestion continue en vol d'un générateur de faisceaux embarqué dans un aéronef selon l'invention,
- la figure 4, un schéma représentant une zone susceptible d'être normalement couverte par le faisceau au sol,
- la figure 5, un schéma représentant une zone susceptible d'être normalement couverte par le faisceau au sol,
- la figure 6, un schéma représentant la zone susceptible d'être réellement couverte par le faisceau au sol en cas de défaillance du générateur de faisceaux,
- la figure 7, un schéma représentant la zone susceptible d'être réellement couverte par le faisceau au sol en cas de défaillance du générateur de faisceaux, et
- la figure 8, une image de l'affichage d'une densité surfacique de risque de blessure due au générateur de faisceaux sur un dispositif de visualisation de l'aéronef.

Les éléments présents dans plusieurs figures distinctes sont affectés d'une seule et même référence.

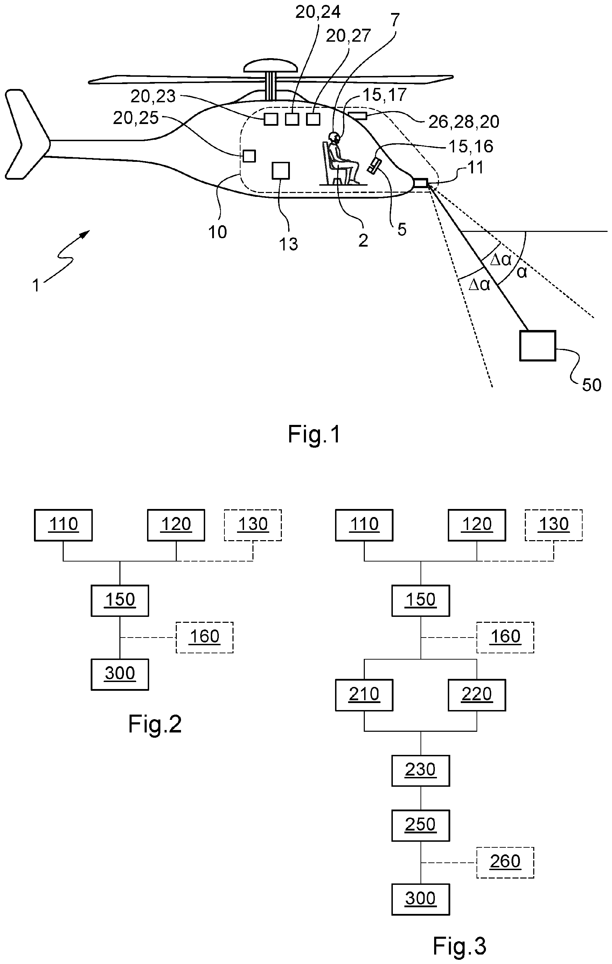

La figure 1 représente un aéronef 1 muni d'un système 10 de gestion continue en vol d'un générateur de faisceaux 11 embarqué dans l'aéronef 1. Ce système 10 comporte le générateur de faisceaux 11 émettant le faisceau lumineux, des senseurs 20, un calculateur 13 et au moins un dispositif de visualisation 15.

Un dispositif de visualisation 15 peut être un écran 16 agencé sur un tableau de bord 5 de l'aéronef 1. Le dispositif de visualisation 15 peut aussi être intégré à un casque 7 d'un opérateur 2 en charge du générateur de faisceaux 11, et projeter des images sur une visière 17 du casque 7. La visière 17 est transparente ou semi-transparente et permet d'avoir une vision directe du paysage extérieur à l'aéronef 1. Le dispositif de visualisation 15 permet ainsi d'afficher des images sur la visière 17 en surimpression de cette vision directe du paysage extérieur à l'aéronef 1. Le dispositif de visualisation 15 peut aussi être une partie du parebrise de l'aéronef 1 ou encore une tablette numérique embarquée dans l'aéronef 1, voire tout autre moyen d'affichage.

Le générateur de faisceaux 11 peut être utilisé par l'opérateur 2 pour diriger un faisceau en direction d'un objet 50 afin de pointer cet objet 50 ou afin par exemple de le désigner comme cible pour un projectile utilisant le faisceau pour être guidé jusqu'à l'objet 50. L'objet 50 peut être au sol, par exemple un véhicule ou un bâtiment, ou en l'air, par exemple un aéronef.

Le générateur de faisceaux 11 peut aussi être utilisé par l'opérateur 2 pour diriger un faisceau lumineux en direction d'une zone afin d'illuminer cette zone, par exemple pour permettre à des personnes équipées d'éléments de vision adaptés d'avoir une vision amplifiée et/ou améliorée de cette zone, par exemple la nuit.

Le faisceau lumineux peut être visible ou non visible par l'œil humain selon la ou les longueurs d'ondes composant ce faisceau. Le faisceau peut comporter une succession d'impulsions lumineuses ou bien être un faisceau continu.

Le calculateur 13 peut comprendre, par exemple, au moins un processeur et au moins une mémoire, au moins un circuit intégré, au moins un système programmable, au moins un circuit logique, ces exemples ne limitant pas la portée donnée à l'expression calculateur. Le terme processeur peut désigner aussi bien une unité centrale de traitement connue sous l'acronyme CPU, une unité graphique de traitement GPU, une unité digitale spécialisée dans le traitement de signaux connue sous l'acronyme DSP, un microcontrôleur...

Le système 10 peut comporter un ou plusieurs senseurs 20, tels que des instruments de mesures, des capteurs ou des caméras, transmettant des signaux analogiques ou numériques, sous forme électrique ou optique, au calculateur 13. Le calculateur 13 est relié par une liaison filaire ou une liaison sans fil au générateur de faisceaux 11 et peut aussi être relié par une liaison filaire ou une liaison sans fil à chaque senseur 20. Le générateur de faisceaux 11 peut également être éventuellement relié par une liaison filaire ou une liaison sans fil à chaque senseur 20.

On entend par « senseur », un capteur physique capable de mesurer directement le paramètre en question mais aussi un système pouvant comprendre un ou plusieurs capteurs physiques, voire une ou plusieurs caméras ainsi que des moyens de traitement du signal ou de l'image permettant de fournir une estimation du paramètre à partir des mesures ou des images fournies par ces capteurs physiques. De manière similaire, on désignera par « mesure » de ce paramètre aussi bien une mesure brute issue d'un capteur qu'une mesure obtenue par un traitement du signal plus ou moins complexe à partir de mesures brutes.

Par exemple, les senseurs 20 peuvent comporter une centrale inertielle 23 et/ou un récepteur de localisation 24 d'un système de localisation par satellites. La centrale inertielle 23 et/ou le récepteur de localisation 24 peuvent également être intégrés au générateur de faisceaux 11 afin de déterminer d'une part les mouvements du générateur de faisceaux 11 caractérisant sa stabilité et, d'autre part, un angle de visée α du faisceau. Cet angle de visée α est défini entre la ligne de visée, à savoir la direction suivie par le faisceau, et par exemple un plan horizontal perpendiculaire à la direction de la gravité terrestre.

En effet, la centrale inertielle 23 peut mesurer notamment des accélérations angulaires à partir desquelles les mouvements de l'aéronef 1 et du générateur de faisceaux 11 peuvent être déduits. Le récepteur de localisation 24 fournit une position de l'aéronef 1, par exemple sous forme de coordonnées dans un référentiel terrestre, les variations de cette position définissant les mouvements de l'aéronef 1 et du générateur de faisceaux 11.

La connaissance des mouvements du générateur de faisceaux 11, indépendamment des mouvements de l'aéronef 1, permet d'en déduire un angle de variation du faisceau en ajoutant la déviation angulaire due aux mouvements de l'aéronef 1 en vol avec la divergence angulaire due au générateur de faisceaux 11 lui-même. Toutefois, la part due au générateur de faisceaux 11 est très faible relativement à la part due aux mouvements de l'aéronef 1 et peut éventuellement être négligée. L'angle de variation $\Delta\alpha$ du faisceau est défini de part et d'autre de la ligne de visée.

Les senseurs 20 peuvent comporter un système électro-optique 25 permettant de mesurer la stabilité du générateur de faisceaux 11 et d'en déduire l'angle de variation $\Delta\alpha$ du faisceau.

Les senseurs 20 peuvent comporter au moins un dispositif de capture d'images 26, tel qu'une caméra ou un appareil photographique, embarqué dans l'aéronef 1. Le calculateur 13 permet de déterminer, par un traitement de plusieurs images captées successivement par un dispositif de capture d'images 26, les mouvements du faisceau sur l'objet 50 et d'en déduire l'angle de variation $\Delta\alpha$ du faisceau.

Les senseurs 20 peuvent comporter une radiosonde 27 mesurant une hauteur $H$ de l'aéronef 1, selon une direction verticale, parallèle à la direction de la gravité terrestre, par rapport au sol survolé.

Les senseurs 20 peuvent comporter un capteur 28 de type LIDAR permettant de scanner l'environnement de l'aéronef 1 avec un faisceau laser et de détecter des objets, des obstacles et le relief du terrain. Le calculateur 13 peut alors, en fonction des informations fournies par le capteur 28 de type LIDAR, réaliser sensiblement en temps réel une modélisation en trois dimensions du terrain. Le calculateur 13 peut également réaliser sensiblement en temps réel une telle modélisation en trois dimensions du terrain à l'aide d'images fournies par un dispositif de capture d'images 26 si celui-ci est stéréoscopique ou à l'aide des images de deux dispositifs de capture d'images 26. Une modélisation en trois dimensions du terrain peut aussi être stockée dans une mémoire reliée ou intégrée au calculateur 13, par exemple sous la forme d'une base de données de terrain.

Le système 10 est configuré pour mettre en oeuvre un procédé de gestion continue en vol du générateur de faisceaux 11 embarqué dans l'aéronef 1 dont un schéma synoptique est représenté sur la figure 2. Ce procédé de gestion continue en vol du générateur de faisceaux 11 comporte les étapes suivantes.

Tout d'abord, une valeur d'au moins un paramètre du générateur de faisceaux 11 est acquise en continue au cours d'une étape d'acquisition 110 à l'aide d'au moins un senseur parmi les senseurs 20. Un paramètre du générateur de faisceaux 11 peut être, par exemple, une température du générateur de faisceaux 11, une durée d'utilisation du générateur de faisceaux 11, des vibrations ou des données d'asservissement du générateur de faisceaux 11.

Une valeur d'au moins un paramètre de l'aéronef 1 est acquise en continue au cours d'une étape d'acquisition 120 à l'aide d'au moins un senseur parmi les senseurs 20, ledit au moins un paramètre de l'aéronef 1 étant distinct dudit au moins un paramètre du générateur de faisceaux 11. Un paramètre de l'aéronef 1 peut être, par exemple, une amplitude de vibrations, un facteur de charges, une accélération, une charge utile et une masse totale de l'aéronef 1.

Ces deux étapes d'acquisition 110,120 sont de préférence réalisées en parallèle. Toutefois, ces deux étapes d'acquisition 110,120 peuvent aussi être réalisées alternativement, par exemple l'une après l'autre.

Le procédé peut aussi comporter de façon optionnelle une étape d'acquisition 130 d'au moins un paramètre de l'environnement de l'aéronef 1 à l'aide d'au moins un senseur parmi les senseurs 20. Un paramètre de l'environnement peut être par exemple une température, une pression atmosphérique ou un taux d'humidité de l'air extérieur à l'aéronef 1 et mesuré à proximité de l'aéronef 1.

Cette étape d'acquisition 130 est de préférence réalisée en parallèle des deux étapes d'acquisition 110,120. Toutefois, cette étape d'acquisition 130 peut aussi être réalisée alternativement avec les deux étapes d'acquisitions 110,120.

Ensuite, le calculateur 13 est configuré pour estimer en continue une information relative à une fiabilité du générateur de faisceaux 11 sur une durée prédéterminée au cours d'une étape d'estimation 150 en fonction au minimum des valeurs successives du ou des paramètres du générateur de faisceaux 11 et du ou des paramètres de l'aéronef 1, de données issues d'un historique du générateur de faisceaux 11, dans sa globalité, et éventuellement des valeurs successives du ou des paramètres de l'environnement. L'historique du générateur de faisceaux comporte des données passées relatives au fonctionnement du générateur de faisceaux 11, à son utilisation et aux opérations de maintenance subies. L'historique est par exemple stocké dans une mémoire reliée ou intégrée au calculateur 13. L'historique est par exemple mis à jour à l'issue de chaque vol ou au fur et à mesure en cours de vol.

Cette information relative à une fiabilité du générateur de faisceaux 11 sur une durée prédéterminée est par exemple estimée à l'aide d'une loi préétablie ou à l'aide d'une intelligence artificielle.

L'information relative à la fiabilité du générateur de faisceaux 11 peut être un taux de fiabilité à court terme du générateur de faisceaux 1 qui peut être fonction d'une durée moyenne entre défaillances *MTBF* théorique, nominale ou observée et/ou des valeurs successives des paramètres du générateur de faisceaux 11, des paramètres de l'aéronef 1, et de données issues d'un historique mémorisé du générateur de faisceaux 11.

En outre, les étapes d'acquisition 110, 120, voire 130 et l'étape d'estimation 150 de l'information relative à la fiabilité du générateur de faisceaux 11 sur une durée prédéterminée sont réalisées en continue, à savoir successivement et à intervalles réguliers, voire irréguliers.

Enfin, au moins une indication relative au générateur de faisceaux 11 est affichée sur le dispositif de visualisation 15 au cours d'une étape d'affichage 300. La ou les indications sont fonction d'une information relative à une fiabilité du générateur de faisceaux 11 sur une durée prédéterminée. Le pilote de l'aéronef 1 ou l'opérateur 2 a ainsi connaissance de cette indication relative au générateur de faisceaux 11. Le pilote de l'aéronef 1 ou l'opérateur 2 peut ainsi utiliser le générateur de faisceaux 11 en ayant connaissance de cette indication qui prend en compte un risque de défaillance du générateur de faisceaux 11.

Une indication relative au générateur de faisceaux 11 peut être l'information relative à la fiabilité du générateur de faisceaux 11 affichée sur le dispositif de visualisation 15 en tant que telle. Dès lors, le dispositif de visualisation 15 peut afficher une valeur du taux de fiabilité à court terme.

De manière alternative ou complémentaire, ladite au moins une indication relative au générateur de faisceaux 11 peut aussi comporter des symboles affichés, par exemple, en fonction de l'information relative à la fiabilité du générateur de faisceaux 11 et d'un seuil de fiabilité prédéterminé afin que le pilote de l'aéronef 1 ou l'opérateur 2 visualise rapidement si un faisceau peut être émis par le générateur de faisceaux 11 sans risque de défaillance du générateur de faisceaux 11. Dans ce but, le procédé selon l'invention peut comporter de façon optionnelle une comparaison 160 de l'information relative à la fiabilité du générateur de faisceaux 11 et de ce seuil de fiabilité.

Ensuite, au cours de l'étape d'affichage 300, un premier symbole est affiché sur le dispositif de visualisation 15 si l'information relative à la fiabilité du générateur de faisceaux 11 est inférieure au seuil de fiabilité, le risque de défaillance du générateur de faisceaux 11 étant alors supérieur à un niveau de risque prédéterminé. A contrario, un deuxième symbole distinct du premier symbole est affiché sur le dispositif de visualisation 15 si l'information relative à la fiabilité du générateur de faisceaux 11 est supérieure au seuil de fiabilité, le risque de défaillance du générateur de faisceaux 11 étant alors inférieur à ce niveau de risque prédéterminé. Lorsque cette information relative à la fiabilité du générateur de faisceaux 11 est égale au seuil de fiabilité, le premier ou le deuxième symbole est affiché en fonction de la valeur de seuil de fiabilité choisie.

Le premier symbole est par exemple un voyant de couleur rouge ou le message « No Go », signifiant que le risque de panne est supérieur au niveau de risque prédéterminé. Le deuxième symbole est par exemple un voyant de couleur verte ou le message « Go », signifiant que le risque de panne est inférieur au niveau de risque prédéterminé.

Le système 10 peut aussi être configuré pour mettre en oeuvre un procédé de gestion continue en vol du générateur de faisceaux 11 embarqué dans l'aéronef 1 afin notamment d'estimer le risque de blessure de personne au sol en fonction de la fiabilité estimée du générateur de faisceaux 11. Un schéma synoptique de ce procédé est représenté sur la figure 3.

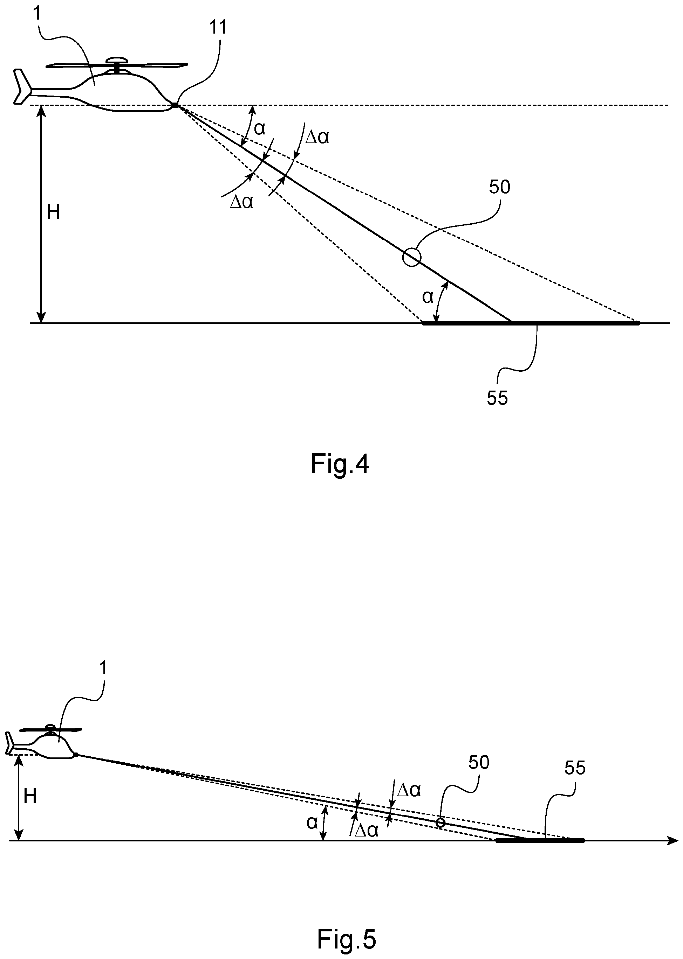

En effet, en cas de fonctionnement correct du générateur de faisceaux 11, la direction d'émission d'un faisceau est située dans un cône dont les limites sont connues et relativement restreintes. Le faisceau peut ainsi impacter le sol sur une zone d'impact 55, comme représenté aux figures 4 et 5.

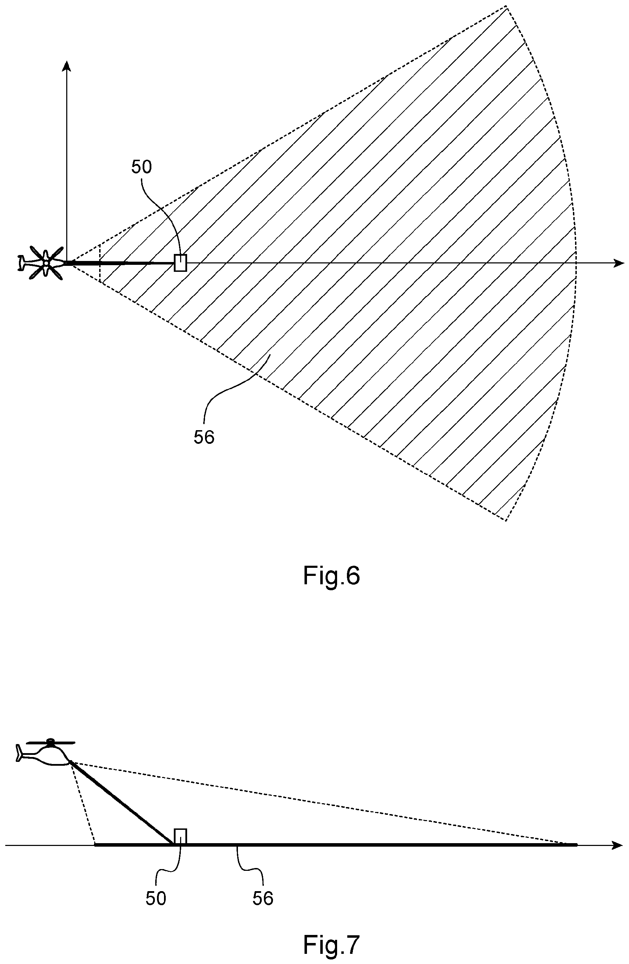

En cas de défaillance du générateur de faisceaux 11, le faisceau peut prendre une direction bien différente et relativement éloignée de la direction visée, comme représenté aux figures 6 et 7. Le faisceau peut alors impacter le sol sur une zone 56 beaucoup plus importante qu'envisagée. Dès lors, des personnes situées en dehors de la zone d'impact 55 envisagée et non protégées peuvent être touchées par le faisceau et éventuellement blessés.

Ce procédé de gestion continue en vol du générateur de faisceaux 11 comporte, en complément des étapes 110-150 et 300 déjà décrites, les étapes suivantes.

Tout d'abord, une position de l'aéronef 1 peut être déterminée au cours d'une étape de détermination 210 réalisée à l'aide du dispositif de localisation. Cette position de l'aéronef 1 peut comporter par exemple la hauteur de l'aéronef 1 par rapport au sol et/ou les coordonnées de l'aéronef 1 dans un référentiel terrestre

Des paramètres du faisceau peuvent être déterminés au cours d'une étape de détermination 220 réalisées à l'aide de senseurs 20, les paramètres du faisceau étant distincts du ou des paramètres du générateur de faisceaux 11 et du ou des paramètres de l'aéronef 1. Les paramètres du faisceau peuvent, par exemple, comporter le coefficient C5, un coefficient d'atténuation du faisceau dans l'air, un angle de visée du faisceau et/ou un angle de variation du faisceau.

Les étapes de déterminations 210,220 peuvent être réalisées suite à l'étape d'estimation 150. Les étapes de déterminations 210,220 peuvent aussi être réalisées en parallèle des étapes d'acquisition 110,120.

Suite aux étapes de déterminations 210,220, une distance de sécurité *NOHD* relative au faisceau peut être déterminée au cours d'une étape de détermination 230 en fonction des paramètres du faisceau, le calculateur 13 étant configuré pour réaliser la détermination de cette distance de sécurité *NOHD.*

Cette distance de sécurité *NOHD* peut être par exemple déterminée en résolvant par itération ou par d'autres méthodes de résolution connues l'équation suivante, en ayant préalablement défini une valeur du seuil d'énergie *MPE* :

$$MPE = \left[\frac{4.P_T}{\pi.(D_T + \theta_B.NOHD)^2}\right].e^{-\sigma_w.NOHD},$$

avec :

MPE, le seuil d'énergie,
NOHD, la distance de sécurité,
$\sigma_w$, le coefficient d'atténuation,
$P_T$, l'énergie initiale du faisceau,
$D_T$, le diamètre du faisceau laser au niveau du générateur de faisceaux 11,
$\theta_B$, angle de divergence du faisceau dû au générateur de faisceaux 11, et
$\pi$, la constante d'Archimède.

La valeur du seuil d'énergie *MPE* est la valeur à partir de laquelle le faisceau est susceptible de provoquer des blessures aux yeux d'une personne atteinte par le faisceau. La valeur du seuil d'énergie *MPE* peut être définie à l'aide de tables accompagnant des normes de sécurité relatives aux faisceaux. Ces tables peuvent être par exemple stockées dans une mémoire reliée ou intégrée au calculateur 13.

Ensuite, la calculateur 13 est configuré pour déterminer au moins une valeur relative au risque de blessure susceptible d'être provoquée par le générateur de faisceaux 11 sur au moins une zone au sol lors d'une étape de détermination 250, en fonction de la position de l'aéronef 1, de la distance de sécurité *NOHD,* des paramètres du faisceau et de l'information relative à une fiabilité du générateur de faisceaux 11.

Ladite au moins une valeur relative au risque de blessure peut être égale à une probabilité de blessure ou à une densité surfacique de risque de blessure.

La valeur relative au risque de blessure est par exemple proportionnelle au produit des facteurs suivants.

Un premier facteur est relatif à l'émission d'un faisceau dans une mauvaise direction suite par exemple à une défaillance du générateur de faisceaux 11. Le calculateur 13 est configuré pour estimer ou déterminer le premier facteur en fonction de l'information relative à une fiabilité du générateur de faisceaux et éventuellement de la durée d'émission du faisceau et/ou du coefficient C5 ainsi que de la distance de sécurité *NOHD.* On peut noter que le premier facteur est nul pour tout point au sol situé à une distance du générateur de faisceaux 11 supérieure à la distance de sécurité *NOHD.*

En outre, lorsqu'une zone sécurisée de type *CRA* au sol a été définie préalablement à l'émission d'un faisceau par le générateur de faisceaux 11, le premier facteur peut être estimé ou déterminé en fonction aussi d'une probabilité que le faisceau soit émis en dehors de la zone sécurisée *CRA* en complément des paramètres déjà évoqués. Par exemple, lorsque la zone sécurisée *CRA* est définie par l'intersection avec le sol d'une sphère de rayon *R* centrée sur le générateur de faisceaux 11 embarqué dans l'aéronef 1, cette probabilité est égale à

$$\frac{\pi.NOHD^2 - \pi.R^2}{\pi.NOHD^2}$$ pour une distance de sécurité *NOHD* supérieure au rayon *R*.

Pour d'autres formes de la zone sécurisée *CRA* au sol, un algorithme spécifique peut être défini afin de calculer cette probabilité.

Un deuxième facteur est relatif au risque que le faisceau atteigne une personne au sol. Le calculateur 13 est configuré pour estimer ou déterminer le deuxième facteur en fonction de la durée d'émission du faisceau, du nombre d'impulsions de ce faisceau et/ou du coefficient C5 ainsi que de la superficie de la zone au sol susceptible d'être couverte par le faisceau.

De façon complémentaire, le deuxième facteur peut être estimé ou déterminé également en fonction de la direction du faisceau, notamment si cette direction du faisceau n'est pas stable. Les mouvements ou la stabilité de cette direction du faisceau peuvent être déterminés à l'aide d'un ou de plusieurs senseurs 20, par exemple le système électro-optique 25 et/ou ledit au moins un dispositif de capture d'images 26.

De façon complémentaire, le deuxième facteur peut être déterminé également en fonction d'une densité de population dans la zone concernée. Cette densité de population peut être stockée dans une mémoire reliée ou intégrée au calculateur 13. En effet, plus la densité de population dans une zone est grande, plus le risque de blesser une personne si un faisceau atteint cette zone est grand.

Un troisième facteur est relatif à la gravité de la blessure provoquée sur une personne au sol atteinte par le faisceau. Ce troisième facteur est généralement prédéfini et constant. Le troisième facteur est par exemple égal à 1.

Un exemple de calcul d'une valeur relative au risque de blessure, et de la probabilité de blessure en particulier, est maintenant décrit en prenant comme hypothèses que la durée moyenne entre défaillances *MTBF,* pour le générateur de faisceaux 11 dans sa globalité, à savoir pour l'ensemble électro-optique permettant l'émission d'un faisceau, est égale à 200 heures, la durée de l'émission du faisceau est de 30 secondes, sa fréquence 20 Hertz et son angle de divergence 0,2 milliradian, la distance parcourue par le faisceau avant d'atteindre le sol étant de 30 kilomètres. Un taux de défaillance du générateur de faisceaux 11 peut être estimé par l'inverse de la durée moyenne entre défaillances *MTBF* exprimée en seconde, soit $1.38889.10^{-6}$ s-1

Le premier facteur est alors égal au produit de ce taux de défaillance et de la durée de l'émission du faisceau, la probabilité que le faisceau soit émis en dehors de la zone sécurisée *CRA* étant considérée comme étant égale à 1. Le premier facteur est alors égal à $4,16667.10^{-5}$.

Pour calculer le deuxième facteur, il faut déterminer la superficie susceptible d'être couverte par le faisceau au sol. Pour une impulsion de faisceau, cette superficie est égale à 28.2743 $m^2$. En considérant que l'opérateur 2 va se rendre compte que le faisceau est émis dans une mauvaise direction suite à une défaillance du générateur de faisceaux 11 et stopper l'émission du faisceau au bout de 2 secondes, 40 impulsions auront été émises. La superficie totale susceptible d'être couverte par le faisceau au sol par ces 40 impulsions est alors de 1130,97 $m^2$. La densité de la population sur la zone concernée étant de 10000 habitants par kilomètre carré, le deuxième facteur est égal à cette superficie totale multipliée par la densité de la population exprimée en habitants par mètre carré, soit 11,3097 personnes sur la zone considérée, ces personnes étant susceptibles d'être exposées.

Le troisième facteur est considéré égal à 1.

La probabilité de blessure peut alors être estimée par le produit de ces trois facteurs et est alors égale selon cet exemple à 0,00047123.

Enfin, lors de l'affichage 300, ladite au moins une indication relative au générateur de faisceaux 11 peut comporter la valeur relative au risque de blessure attachée à ladite au moins une zone au sol.

Une indication relative au générateur de faisceaux 11 peut par exemple comporter la valeur de probabilité de blessure attachée à ladite au moins une zone au sol, soit 0,00047123 pour l'exemple de calcul présenté.

Le pilote ou l'opérateur en charge du générateur de faisceaux 11 peut ainsi avoir connaissance de l'existence d'un risque de blessure par le faisceau de personnes non protégées susceptibles de se situer au sol sur une ou plusieurs zones.

Ladite au moins une indication relative au générateur de faisceaux 11 peut aussi comporter un indicateur fonction de ladite au moins une valeur relative au risque de blessure. Par exemple, cet indicateur peut par exemple comporter un symbole représentant un niveau de la valeur relative au risque de blessure sur une zone par rapport à un seuil de risque prédéfini. Dans ce but, le procédé selon l'invention peut comporter de façon optionnelle une étape de comparaison 260 de la valeur relative au risque de blessure attachée à chaque zone au sol et d'un seuil de risque prédéterminé. Ladite au moins une indication relative au générateur de faisceaux 11 comporte alors un troisième symbole si la valeur relative au risque de blessure est inférieure au seuil de risque et un quatrième symbole distinct du troisième symbole si la valeur relative au risque de blessure est supérieure au seuil de risque. Lorsque cette valeur relative au risque de blessure est égale au seuil de risque, le troisième ou le quatrième symbole est affiché en fonction de la valeur de seuil de risque choisie.

Le troisième symbole est par exemple un voyant de couleur verte ou le message « Go », signifiant que le risque de blessure est inférieur au seuil de risque prédéterminé. Le quatrième symbole est par exemple un voyant de couleur rouge ou le message « No Go », signifiant que le risque de blessure est supérieur au seuil de risque prédéterminé.

De la sorte, le pilote de l'aéronef ou l'opérateur en charge du générateur de faisceaux 11 visualise rapidement, grâce au troisième symbole ou au quatrième symbole affiché, si la valeur relative au risque de blessure est inférieure ou supérieure au seuil de risque prédéterminé et donc si l'émission d'un faisceau peut être effectuée de façon fiable avec un risque de blesser une personne au sol inférieur au seuil de risque prédéterminé.

De plus, au moins une zone spécifique parmi ladite au moins une zone au sol peut être prédéfinie, cette zone spécifique comportant par exemple une zone sécurisée *CRA* dans laquelle est effectuée l'émission d'un faisceau et dans laquelle aucune personne non protégée ne doit se trouver. Dès lors, si la valeur relative au risque de blessure attachée à une zone au sol distincte de ladite zone spécifique est supérieure à un seuil de risque prédéfini, un message d'alerte est émis afin de prévenir le pilote ou l'opérateur 2 de ce risque de blessure à l'extérieur de la zone sécurisée *CRA*.

En outre, un ou plusieurs seuils de risque peuvent être prédéfinis et l'étape de détermination 250 d'une valeur relative au risque de blessure peut comporter une sous-étape de calcul des dimensions d'une ou de plusieurs zones spécifiques par le calculateur 13 en fonction de la position de l'aéronef 1, de la distance de sécurité *NOHD,* des paramètres du faisceau, d'une valeur relative au risque de blessure attachée à chaque zone spécifique et d'un seuil de risque prédéfini, la valeur relative au risque de blessure attachée à la zone spécifique étant par exemple supérieure à un seuil de risque prédéfini.

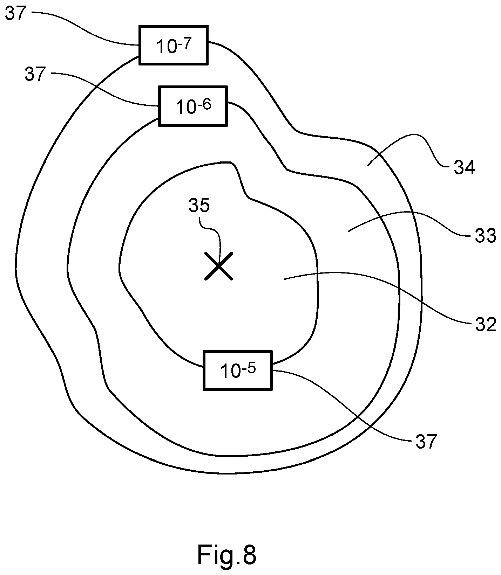

Selon l'exemple présenté sur la figure 8, plusieurs zones 32,33,34 sont affichées ainsi que des valeurs 37 de densités surfaciques de risque de blessure attachées à chacune des lignes limitant ces zones 32,33,34. Ces lignes correspondent ainsi à des lignes de niveau auxquelles sont attachées respectivement les valeurs 37 de densités surfaciques de risque de blessure. Ainsi, sur la zone 32, la densité surfacique de risque de blessure est supérieure à $10^{-5}$ par $km^2$, alors que la densité surfacique de risque de blessure est comprise entre $10^{-6}$ et $10^{-5}$ par $km^2$ sur la zone 33. Sur la zone 34, la densité surfacique de risque de blessure est comprise entre $10^{-7}$ et $10^{-6}$ par $km^2$.

Alternativement ou en complément de ses lignes de niveau relatives à la densité surfacique de risque, des zones de couleurs, voire des zones en dégradé de couleurs peuvent être affichées entre ces lignes de niveau afin d'indiquer l'évolution de la densité surfacique de risque. Par exemple, la zone 34 peut être affichée avec la couleur vert pour indiquer une densité surfacique de risque inférieure $10^{-7}$ par $km^2$, la zone 33 peut être affichée avec la couleur orange pour indiquer une densité surfacique de risque comprise entre $10^{-7}$ et $10^{-6}$ par $km^2$ et la zone 32 peut être affichée avec la couleur rouge pour indiquer une densité surfacique de risque supérieure $10^{-5}$ par $km^2$.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Procédé de gestion continue en vol d'un générateur de faisceaux (11) embarqué dans un aéronef (1), ledit aéronef (1) comportant :

   - ledit générateur de faisceaux (11) émettant un faisceau lumineux,
   - des senseurs (20),
   - un calculateur (13),
   - un dispositif de visualisation (15), et
   - un dispositif de localisation (24),

   ledit procédé comportant les étapes suivantes :

   - acquisition (110) en continue d'une valeur d'au moins un paramètre dudit générateur de faisceaux (11) à l'aide d'au moins un senseur parmi lesdits senseurs (20),
   - acquisition (120) en continue d'une valeur d'au moins un paramètre dudit aéronef (1) à l'aide d'au moins un senseur parmi lesdits senseurs (20), ledit au moins un paramètre dudit aéronef (1) étant distinct dudit au moins un paramètre dudit générateur de faisceaux (11),
   - estimation (150) en continue d'au moins une information relative à une fiabilité dudit générateur de faisceaux (11) sur une durée prédéterminée à l'aide dudit calculateur (13) en fonction au minimum desdits valeurs successives dudit au moins un paramètre dudit générateur de faisceaux (11) et dudit au moins un paramètre dudit aéronef (1), et de données issues d'un historique mémorisé dudit générateur de faisceaux (11), et
   - affichage (300) d'au moins une indication relative audit générateur de faisceaux (11) sur ledit dispositif de visualisation (15), ladite au une moins une indication étant fonction de ladite information,

   **caractérisé en ce que** ledit procédé comporte les étapes suivantes :

   - détermination (210) d'une position dudit aéronef (1) à l'aide dudit dispositif de localisation (24),
   - détermination (220) de paramètres dudit faisceau, lesdits paramètres dudit faisceau, étant distincts dudit au moins un paramètre dudit aéronef (1) et dudit au moins un paramètre dudit générateur de faisceaux (11),

- détermination (230) d'une distance de sécurité (NOHD) relative audit faisceau lumineux en fonction desdits paramètres dudit faisceau à l'aide dudit calculateur (13),

- détermination (250) d'au moins une valeur relative au risque de blessure susceptible d'être provoquée par ledit générateur de faisceaux (11) sur au moins une zone au sol, en fonction de ladite position dudit aéronef (1), de ladite distance de sécurité (NOHD), desdits paramètres dudit faisceau et de ladite information relative à une fiabilité dudit générateur de faisceaux (11) à l'aide dudit calculateur (13),

- lors dudit affichage (300), ladite au moins une indication relative audit générateur de faisceaux (11) est fonction de ladite au moins une valeur relative au risque de blessure attachée à ladite au moins une zone au sol.

2. Procédé selon la revendication 1, comportant une acquisition (130) d'au moins un paramètre de l'environnement dudit aéronef (1) à l'aide d'au moins un senseur parmi lesdits senseurs (20), ledit au moins un paramètre dudit environnement étant choisi parmi une température de l'air extérieur audit aéronef (1), une pression atmosphérique extérieure audit aéronef (1), un taux d'humidité de l'air extérieur audit aéronef (1), ladite estimation (150) de ladite information relative à ladite fiabilité dudit générateur de faisceaux (11) étant également réalisée en fonction dudit au moins un paramètre dudit environnement.

3. Procédé selon l'une quelconque des revendications 1 à 2, **caractérisé en ce que** ledit au moins un paramètre dudit générateur de faisceaux (11) est choisi parmi une température, une durée d'utilisation, des vibrations et des données d'asservissement dudit générateur de faisceaux (11), et ledit au moins un paramètre dudit aéronef (1) comporte une vibration ou un facteur de charges dudit aéronef (1).

4. Procédé selon l'une quelconque des revendications 1 à 3, **caractérisé en ce que** ledit historique dudit générateur de faisceaux (11) comporte au minimum des données relatives à des pannes et défaillances dudit générateur de faisceaux (11), à des opérations de maintenance effectuées sur ledit générateur de faisceaux (11), à des durées d'utilisation dudit générateur de faisceaux (11) et à des émissions de faisceaux effectuées par ledit générateur de faisceaux (11).

5. Procédé selon l'une quelconque des revendications 1 à 4, **caractérisé en ce que** ledit historique dudit générateur de faisceaux (11) comporte au minimum des données relatives à des pannes et défaillances dudit générateur de faisceaux (11), ladite information relative à ladite fiabilité dudit générateur de faisceaux (11) est un taux de fiabilité à court terme, fonction d'une durée moyenne entre défaillances (MTBF) et desdits valeurs successives dudit au moins un paramètre dudit générateur de faisceaux (11), dudit au moins un paramètre dudit aéronef (1), et de données issues d'un historique mémorisé dudit générateur de faisceaux (11).

6. Procédé selon l'une quelconque des revendications 1 à 5, **caractérisé en ce que** ladite au moins une indication relative audit générateur de faisceaux (11) comporte ladite information relative à ladite fiabilité dudit générateur de faisceaux (11).

7. Procédé selon l'une quelconque des revendications 1 à 6, **caractérisé en ce que** ladite estimation (150) est réalisée à l'aide d'une loi ou est réalisée à l'aide d'une intelligence artificielle.

8. Procédé selon l'une quelconque des revendications 1 à 7, comportant une comparaison (160) de ladite information relative à ladite fiabilité dudit générateur de faisceaux (11) et d'un seuil de fiabilité prédéterminé, et ladite au moins une indication relative audit générateur de faisceaux (11) comporte un premier symbole si ladite information relative à ladite fiabilité dudit générateur de faisceaux (11) est inférieure audit seuil de fiabilité et un deuxième symbole distinct dudit premier symbole si ladite information relative à ladite fiabilité dudit générateur de faisceaux (11) est supérieure audit seuil de fiabilité.

9. Procédé selon l'une quelconque des revendications 1 à 8, **caractérisé en ce que** ladite au moins une valeur relative au risque de blessure est déterminée en fonction aussi d'une densité de population sur ladite zone concernée parmi ladite au moins une zone au sol, ladite densité de population étant stockée dans une mémoire dudit calculateur (13) ou dans une mémoire reliée audit calculateur (13).

10. Procédé selon l'une quelconque des revendications 1 à 9, **caractérisé en ce que** ladite au moins une indication relative audit générateur de faisceaux (11) comporte au moins une zone au sol et un indicateur fonction de ladite au moins une valeur relative au risque de blessure attachée à ladite au moins une zone au sol.

11. Procédé selon l'une quelconque des revendications 1 à 10,
**caractérisé en ce que** lesdits paramètres dudit faisceau comporte plusieurs des paramètres suivants :

- un coefficient (*C5*) relatif à une durée d'émission dudit faisceau lumineux et à sa fréquence d'impulsions,
- un coefficient d'atténuation dudit faisceau lumineux dans l'air.

12. Procédé selon l'une quelconque des revendications 1 à 11,
**caractérisé en ce qu'**au moins une zone spécifique parmi ladite au moins une zone au sol est prédéfinie, et le procédé comporte une émission d'un message d'alerte si ladite au moins une valeur relative au risque de blessure attachée à une zone parmi ladite au moins une zone au sol qui est distincte de ladite au moins une zone spécifique est supérieure à un seuil de risque prédéfini.

13. Procédé selon l'une quelconque des revendications 1 à 12,
**caractérisé en ce que** plusieurs zones (32,33,34) sont affichées, lesdites zones (32,33,34) étant séparées par des lignes auxquelles sont attachées des valeurs (37) de densités surfaciques de risque de blessure.

14. Système (10) de gestion continue en vol d'un générateur de faisceaux (11) embarqué dans un aéronef (1), ledit système (10) comportant :

- ledit générateur de faisceaux (11) émettant un faisceau lumineux,
- des senseurs (20),
- un calculateur (13), et
- un dispositif de visualisation (15),

**caractérisé en ce que** ledit système (10) est configuré pour mettre en oeuvre le procédé selon l'une quelconque des revendications 1 à 13.

**Patentansprüche**

1. Verfahren zur kontinuierlichen Steuerung eines in einem Luftfahrzeug (1) eingebauten Strahlgenerators (11) während des Fluges, wobei das Luftfahrzeug (1) umfasst:

- den Strahlgenerator (11), der einen Lichtstrahl aussendet,
- Sensoren (20),
- einen Rechner (13),
- eine Anzeigevorrichtung (15), und
- eine Lokalisierungsvorrichtung (24),

wobei das Verfahren die folgenden Schritte umfasst:

- kontinuierliches Erfassen (110) eines Werts von mindestens einem Parameter des Strahlgenerators (11) mithilfe von mindestens einem der Sensoren (20),
- kontinuierliches Erfassen (120) eines Werts von mindestens einem Parameter des Luftfahrzeugs (1) mit Hilfe von mindestens einem der Sensoren (20), wobei der mindestens eine Parameter des Luftfahrzeugs (1) von dem mindestens einen Parameter des Strahlgenerators (11) verschieden ist,
- kontinuierliches Schätzen (150) von mindestens einer Information bezüglich einer Zuverlässigkeit des Strahlgenerators (11) über eine vorgegebene Zeitspanne mit Hilfe des Rechners (13) in Abhängigkeit von mindestens den aufeinanderfolgenden Werten des mindestens einen Parameters des Strahlgenerators (11) und des mindestens einen Parameters des Flugzeugs (1) sowie von Daten aus einer gespeicherten Historie des Strahlgenerators (11); und
- Anzeigen (300) mindestens einer Angabe bezüglich des Strahlgenerators (11) auf der Anzeigevorrichtung (15), wobei die mindestens eine Angabe von der Information abhängig ist,

**dadurch gekennzeichnet, dass** das Verfahren die folgenden Schritte umfasst:

- Bestimmen (210) einer Position des Luftfahrzeugs (1) mithilfe der Lokalisierungsvorrichtung (24),
- Bestimmen (220) von Parametern des Strahls, wobei die Parameter des Strahls von dem mindestens einem Parameter des Luftfahrzeugs (1) und von dem mindestens einem Parameter des Strahlgenerators (11) verschieden sind,
- Bestimmen (230) eines Sicherheitsabstands (NOHD) bezüglich des Lichtstrahls in Abhängigkeit von den Parametern des Strahls mit Hilfe des Rechners (13),
- Bestimmen (250) mindestens eines Wertes bezüglich des Verletzungsrisikos, das durch den Strahlgenerator (11) auf mindestens einem Bodenbereich hervorgerufen werden kann, in Abhängigkeit von der Position des Luftfahrzeugs (1), dem Sicherheitsabstand (NOHD), den Parametern des Strahls und der Information bezüglich einer Zuverlässigkeit des Strahlgenerators (11) mit Hilfe des Rechners (13),
- wobei beim Anzeigen (300) die mindestens eine Angabe bezüglich des Strahlgenerators (11) von dem mindestens einen Wert bezüglich des Verletzungsrisikos abhängt, das dem mindestens einen Bodenbereich zugeordnet ist.

**2.** Verfahren nach Anspruch 1,

umfassend ein Erfassen (130) mindestens eines Parameters der Umgebung des Luftfahrzeugs (1) mit Hilfe mindestens eines Sensors unter den Sensoren (20), wobei der mindestens eine Parameter der Umgebung ausgewählt ist aus einer Temperatur der Luft außerhalb des Luftfahrzeugs (1), einem atmosphärischen Druck außerhalb des Luftfahrzeugs (1), einem Feuchtigkeitsgrad der Luft außerhalb des Luftfahrzeugs (1), wobei das Schätzen (150) der Information bezüglich der Zuverlässigkeit des Strahlgenerators (11) auch in Abhängigkeit von dem mindestens einen Parameter der Umgebung durchgeführt wird.

**3.** Verfahren nach einem der Ansprüche 1 bis 2, **dadurch gekennzeichnet, dass** der mindestens eine Parameter des Strahlgenerators (11) aus einer Temperatur, einer Betriebszeit, Vibrationen und Servodaten des Strahlgenerators (11) ausgewählt ist, und der mindestens eine Parameter des Luftfahrzeugs (1) eine Vibration oder einen Belastungsfaktor des Luftfahrzeugs (1) umfasst.

**4.** Verfahren nach einem der Ansprüche 1 bis 3, **dadurch gekennzeichnet, dass** die Historie des Strahlgenerators (11) mindestens Daten über Störungen und Ausfälle des Strahlgenerators (11), über an dem Strahlgenerator (11) durchgeführte Wartungsarbeiten, über die Nutzungsdauer des Strahlgenerators (11) und über von dem Strahlgenerator (11) durchgeführte Strahlemissionen enthält.

**5.** Verfahren nach einem der Ansprüche 1 bis 4, **dadurch gekennzeichnet, dass** die Historie des Strahlgenerators (11) mindestens Daten über Störungen und Ausfälle des Strahlgenerators (11) enthält, wobei die Information über die Zuverlässigkeit des Strahlgenerators (11) eine kurzfristige Zuverlässigkeitsrate ist, die von einer mittleren Zeit zwischen Ausfällen (MTBF) und den aufeinanderfolgenden Werten des mindestens einen Parameters des Strahlgenerators (11), des mindestens einen Parameters des Luftfahrzeugs (1) und von Daten aus einer gespeicherten Historie des Strahlgenerators (11) abhängt.

**6.** Verfahren nach einem der Ansprüche 1 bis 5, **dadurch gekennzeichnet, dass** die mindestens eine Angabe bezüglich des Strahlgenerators (11) die Information bezüglich der Zuverlässigkeit des Strahlgenerators (11) enthält.

**7.** Verfahren nach einem der Ansprüche 1 bis 6, **dadurch gekennzeichnet, dass** das Schätzen (150) mit Hilfe einer Regel durchgeführt wird oder mit Hilfe einer künstlichen Intelligenz durchgeführt wird.

**8.** Verfahren nach einem der Ansprüche 1 bis 7, mit einem Vergleichen (160) der Information über die Zuverlässigkeit des Strahlgenerators (11) mit einem vorgegebenen Zuverlässigkeitsschwellenwert, wobei die mindestens eine Angabe bezüglich des Strahlgenerators (11) ein erstes Symbol aufweist, wenn die Information über die Zuverlässigkeit des Strahlgenerators (11) kleiner als der Zuverlässigkeitsschwellenwert ist, und ein zweites Symbol, das sich vom ersten Symbol unterscheidet, wenn die Information über die Zuverlässigkeit des Strahlgenerators (11) größer als der Zuverlässigkeitsschwellenwert ist.

**9.** Verfahren nach einem der Ansprüche 1 bis 8, **dadurch gekennzeichnet, dass** der mindestens eine Wert bezüglich des Verletzungsrisikos auch in Abhängigkeit von einer Bevölkerungsdichte in dem betreffenden Bereich des mindestens einen Bodenbereichs bestimmt wird, wobei die Bevölkerungsdichte in einem Speicher des Rechners (13) oder in einem mit dem Rechner (13) verbundenen Speicher gespeichert ist.

**10.** Verfahren nach einem der Ansprüche 1 bis 9, **dadurch gekennzeichnet, dass** die mindestens eine Angabe bezüglich des Strahlgenerators (11) mindestens einen Bodenbereich und einen Indikator umfasst, der von dem mindestens einen Wert bezüglich des Verletzungsrisikos abhängt, der dem mindestens einen Bodenbereich zugeordnet ist.

**11.** Verfahren nach einem der Ansprüche 1 bis 10, **dadurch gekennzeichnet, dass** die Parameter des Strahls mehrere der folgenden Parameter umfassen:

- einen Koeffizienten (C5), der sich auf eine Emissionsdauer des Lichtstrahls und seine Impulsfrequenz bezieht,
- einen Koeffizienten für die Abschwächung des Lichtstrahls in der Luft.

**12.** Verfahren nach einem der Ansprüche 1 bis 11, **dadurch gekennzeichnet, dass** unter dem mindestens einen Bodenbereich mindestens ein spezifischer Bereich vordefiniert ist, und das Verfahren ein Ausgeben einer Warnmeldung umfasst, wenn der mindestens eine Wert bezüglich des Verletzungsrisikos, der einem Bereich unter dem mindestens einen Bodenbereich zugeordnet ist, der sich von dem mindestens einen spezifischen Bereich unterscheidet, über einem vordefinierten Risikoschwellenwert liegt.

**13.** Verfahren nach einem der Ansprüche 1 bis 12, **dadurch gekennzeichnet, dass** mehrere Bereiche (32, 33, 34) angezeigt werden, wobei die Bereiche (32, 33, 34) durch Linien getrennt sind, denen die Werte (37) für die Flächendichte des Verletzungsrisikos zugeordnet sind.

**14.** System (10) zur kontinuierlichen Steuerung eines in einem Luftfahrzeug (1) mitgeführten Strahlgenerators (11) während des Fluges, wobei das System (10) umfasst:

- den Strahlgenerator (11), der einen Lichtstrahl aussendet,
- Sensoren (20),
- einen Rechner (13), und
- eine Anzeigevorrichtung (15),

**dadurch gekennzeichnet, dass** das System (10) konfiguriert ist, um das Verfahren nach einem der Ansprüche 1 bis 13 auszuführen.

## Claims

**1.** Method for continuous in-flight management of a beam generator (11) on board an aircraft (1), said aircraft (1) comprising:

- said beam generator (11) emitting a light beam,
- sensors (20),
- a calculator (13),
- a display device (15), and
- a tracking device (24),

said method comprising the following steps:

- continuously acquiring (110) a value of at least one parameter of said beam generator (11) by means of at least one sensor of said sensors (20);
- continuously acquiring (120) a value of at least one parameter of said aircraft (1) by means of at least one sensor of said sensors (20), said at least one parameter of said aircraft (1) being distinct from said at least one parameter of said beam generator (11);
- continuously estimating (150) at least one piece of information relating to the reliability of said beam generator (11) over a predetermined time period by means of said calculator (13), as a function, at the very least, of said successive values of said at least one parameter of said beam generator (11) and of said at least one parameters of said aircraft (1), and of data from a stored history of said beam generator (11), and
- displaying (300) at least one indication relating to said beam generator (11) on said display device (15), said at least one indication being dependent on said piece of information,

**characterised in that** said method comprises the following steps:

- determining (210) a position of said aircraft (1) by means of said tracking device (24),
- determining (220) parameters of said beam, said parameters of said beam being distinct from said at least one parameter of said aircraft (1) and from said at least one parameter of said beam generator (11),
- determining (230) a safety distance (NOHD) relative to said light beam as a function of said parameters of said beam by means of said calculator (13),
- determining (250) at least one value relating to the risk of injury likely to be caused by said beam generator (11) in at least one zone on the ground, as a function of said position of said aircraft (1), said safety distance (NOHD), said parameters of said beam and said piece of information relating to the reliability of said beam generator (11) by means of said calculator (13),
- at the time of said displaying step (300), said at least one indication relating to said beam generator (11) is a function of said at least one value relating to the risk of injury associated with said at least one zone on the ground.

**2.** Method according to claim 1, comprising acquiring (130) at least one parameter of the environment of said aircraft (1) by means of at least one sensor of said sensors (20), said at least one parameter of said environment being chosen from a temperature of the air outside said aircraft (1), an atmospheric pressure outside said aircraft (1), a humidity level of the air outside said aircraft (1), said step of estimating (150) said piece of information relating to said reliability of said beam generator (11) also being carried out as a function of said at least one parameter of said environment.

**3.** Method according to any one of claims 1 to 2, **characterised in that** said at least one parameter of said beam generator (11) is selected from temperature, duration of use, vibrations and servo data of said beam generator (11), and said at least one parameter of said aircraft (1) comprises a vibration or a load factor of said aircraft (1).

**4.** Method according to any one of claims 1 to 3, **characterised in that** said history of said beam generator (11) comprises at least data relating to malfunctions and failures of said beam generator (11), maintenance operations performed on said beam generator (11), durations of use of said beam generator (11) and beam emissions made by said beam generator (11).

5. Method according to any one of claims 1 to 4, **characterised in that** the history of said beam generator (11) comprises at least data relating to malfunctions and failures of said beam generator (11), said piece of information relating to the reliability of said beam generator (11) is a short-term reliability level, depending on a mean time between failures (MTBF) and on said successive values of said at least one parameter of said beam generator (11), said at least one parameter of said aircraft (1) and data from a stored history of said beam generator (11).

6. Method according to any one of claims 1 to 5, **characterised in that** said at least one indication relating to said beam generator (11) comprises said piece of information relating to said reliability of said beam generator (11).

7. Method according to any one of claims 1 to 6, **characterised in that** said estimation (150) is made using a law or is made using an artificial intelligence.

8. Method according to any one of claims 1 to 7, comprising comparing (160) said piece of information relating to said reliability of said beam generator (11) and a predetermined reliability threshold, and said at least one indication relating to said beam generator (11) comprises a first symbol if said piece of information relating to said reliability of said beam generator (11) is less than said reliability threshold and a second symbol distinct from said first symbol if said piece of information relating to said reliability of said beam generator (11) is greater than said reliability threshold.

9. Method according to any one of claims 1 to 8, **characterised in that** said at least one value relating to the risk of injury is determined also as a function of a population density in said zone of interest of said at least one zone on the ground, said population density being stored in a memory of said calculator (13) or in a memory connected to said calculator (13).

10. Method according to any one of claims 1 to 9, **characterised in that** said at least one indication relating to said beam generator (11) comprises at least one zone on the ground and an indicator that is a function of said at least one value relating to the risk of injury associated with said at least one zone on the ground.

11. Method according to any one of claims 1 to 10, **characterised in that** said parameters of said beam comprise several of the following parameters:

- a coefficient (C5) relating to a duration of emission of said light beam and to its pulse frequency,
- an attenuation coefficient of said light beam in air.

12. Method according to any one of claims 1 to 11, **characterised in that** at least one specific zone of said at least one zone on the ground is predefined, and the method comprises issuing an alert message if said at least one value relating to the risk of injury associated with one of said at least one zone on the ground that is distinct from the at least one specific zones is greater than a predefined risk threshold.

13. Method according to any one of claims 1 to 12, **characterised in that** several zones (32,33,34) are displayed, said zones (32,33,34) being separated by lines with associated values (37) of densities per unit surface area of risk of injury.

14. System (10) for continuous in-flight management of a beam generator (11) on board an aircraft (1), said system (10) comprising:

- said beam generator (11) emitting a light beam,
- sensors (20),
- a calculator (13), and
- a display device (15),

**characterised in that** said system (10) is configured to implement the method according to any one of claims 1 to 13.

Fig.1

Fig.2

Fig.3

Fig.4

Fig.5

50

56

Fig.6

50          56

Fig.7

37 ⌐ 10⁻⁷

37 ⌐ 10⁻⁶

34

35

33

✕

32

10⁻⁵

37

Fig.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4143835 A
- US 20090273770 A
- FR 2970358
- US 20100073198 A

- EP 3521855 A
- US 8400625 B
- FR 2104570

**Littérature non-brevet citée dans la description**

- **R. SABATINI ; M.A RICHARDSON.** *A new approach to eye-safety analysis for airborne laser systems flight test and training operations,* 01 Avril 2003
- **ROBERT J. THOMAS ; BENJAMIN A. ROCKWELL.** *A procedure for the estimation of intrabeam hazard distances and optical density requirements under the ANSI Z136.1-2000 Standard,* 01 Août 2004

- AFRL-RH-FS-TR-2014-0035. *MATILDA: A Military Laser Range Safety Tool Based on Probabilistic Risk Assessment (PRA) Techniques,* 2014
- **DE ROBERT J. THOMAS ; BENJAMIN A. ROCKWELL.** *A procedure for the estimation of intrabeam hazard distances and optical density requirements under the ANSI Z136.1-2000 Standard,* 01 Août 2004